# EUROPEAN PATENT SPECIFICATION

(11) **EP 1 047 507 B1**
(45) Date of publication and mention of the grant of the patent: **16.07.2003**
(21) Application number: 99904126.2
(22) Date of filing: 19.01.1999
(51) Int. Cl.: B05C 9/02, B05C 9/12, B05C 11/08, G11B 7/26

(54) **PROCESS AND DEVICE FOR COATING DISKS**
VORRICHTUNG UND VERFAHREN ZUM BESCHICHTEN VON SCHEIBEN
PROCEDE ET DISPOSITIF DE REVETEMENT DE DISQUES

(30) Priority: 19.01.1998 CH 11898
(43) Date of publication of application: 02.11.2000
(73) Proprietor: STEAG HamaTech, Inc., Saco, ME 04072 (US)
(72) Inventor: SAWATZKI, Harry, CH-9494 Schaan (CH); SAWATZKI, Bruno, CH-9490 Vaduz (CH)
(74) Representative: Betten & Resch
(86) International application number: US9901078
(87) International publication number: WO99036187

(56) References cited:
- EP-A- 0 793 224
- EP-A- 0 814 470
- US-A- 3 927 409
- US-A- 4 102 304
- US-A- 4 204 641
- US-A- 4 590 094
- US-A- 4 842 469
- US-A- 4 851 263
- "UPSIDE-DOWN RESIST COATING OF SEMICONDUCTOR WAFERS" IBM TECHNICAL DISCLOSURE BULLETIN, vol. 32, no. 1, June 1989, pages 311-313, XP000033192

## Description

The invention concerns a device according to the description in claim 1 and a process according to the description in claim 8.

During the production of compact disks or optically readable data carriers, for example, CD-R disks or digital video disks (DVD), the disk is placed on a rotating support in a clean-air room and a coating liquid applied to the rotating disk from above by means of a nozzle. The centrifugal force acting upon the rotating disk is supposed to distribute the coating liquid outward and evenly over the disk. The demands imposed relative to maintaining the desired coating depth are great. Following the application of those layers acting as information carriers, a protective coating, in particular a lacquer coating, is applied. In the case of DVDs with multiple layers, or coated on both sides, the two disk parts must be bonded together with an extremely precise interval separating them. To prevent disturbances, it is necessary to ensure that the layer thicknesses themselves are formed very accurately and that the bond will result without trapping gas bubbles. Contaminants which could settle onto the coating from above must be prevented with expensive installations in the clean-air rooms.

A coating device is known from EP 356,140 which coats a disk lying on a rotating support inside a sealed chamber through a discharge or nozzle port. A small clearance above the disk is supposed to prevent any droplets thrown off by the rotating movement of the disk edge from reentering on or below the disk through the circulation system. It was then however found that a sealed space above the disk can lead to increased temperature or an uneven temperature distribution on the support as a result of the heat arising from the drive for the disk support Temperature differences on the disk or in the applied coating liquid can lead to differences in flow behavior and correspondingly uneven coating thicknesses. At the start of the coating process, the fluid present in the supply line to the nozzle can have a temperature different from that of the liquid flowing in from the storage container. Moreover, droplet formation on the nozzle opening can lead to disturbances at the beginning or end of the coating operation. Because the liquid cannot be applied exactly during precisely one revolution of the disk, steps in the applied coating composition can result in the starting or end zones. These are broken up by flow, but often not completely, particularly in the case of coating materials of high viscosity.

Temperature-dependent flow behavior will also load then to problems when the discharge nozzle is moved radially over the disk with a precision movement device. When coating with a movable nozzle, the coating liquid is applied to the disk in precise bands precisely where it is supposed to be. The construction of the movement device must be extremely complex and, in addition, together with the rotating movement and a metering pump for the coating liquid, controlled by a complex mechanism. Because the fluids to be applied may also possibly harden at the outlet when the rate of flow decreases, the danger also arises that the supply lines may become plugged.

U.S. Pat No. 4.842,469 discloses a system for applying a sealant on one side of a can end at a hat-shaped opening punched from the can end. Specifically, the sealant is applied to an edge area that is punched from the can end.

The invention therefore addresses the problem of finding a device and/or process, which makes it possible at low cost to provide the disk with a precise and rotationally symmetrically distributed coating of constant quality and without contamination.

This problem is solved by the characteristics of claims 1 through 8. The dependent subclaims describe advantageous execution variants.

During the solution of the problem it was recognized that a linear application, or the application of the coating liquid with a nozzle having the form of a hole, leads to the significant quality problems and to the complex design of the known solutions. If the coating liquid can be conveyed essentially continuously by an annular wetting zone and collected in a collection zone, a rotationally symmetrical application of the coating liquid can be achieved by the contact of the disk to be coated with the wetting zone. The device components required to achieve that and also the control are very simple. It is possible to do without a rotating support, a movable discharge opening and a metering device. A constant viscosity of the coating liquid can be achieved by a continuous flow of the same, and no problems result as a result of droplet formation, blockage and temperature variations in the supply lines. These advantages result in production with constant quality. Because no extremely exact dosage of small throughput quantities is necessary, the coating device need not be adapted to the coating liquid used. Correspondingly, both dyes and lacquers as well as bonding materials can be applied with a standard device.

Following the application of the coating materials to an annular zone of the disk, a distribution takes place in a radial direction, according to the respective purpose of the coating. Use is made in this case of a centrifugal process, at least for coatings of dye and protective lacquer. During the centrifugal process, the material applied in a ring is moved radially outward as a result of centrifugal force, until a layer with a constant thickness is formed. The initial application must thus take place at the inner edge of the disk. The portion thrust outward is preferably collected and reused after a filtration and/or degassing step. To permit the preparation of an uncoated outer edge, a cleaning step per the state of the art is provided, particularly with a cleaning jet aimed radially outward. To prevent the mixing of the clean coating material with that portion washed off with the cleaning fluid, the centrifuging and cleaning take place within different recovery zones. If necessary, the centrifuging takes place already in the coating and the cleaning in a different device. For both steps, however, the disks are optionally transported into a centrifuge, in which two different annular slots, perhaps alternating, are arranged radially outside the disk, a first annular slot being used for distribution by centrifugal action and a second annular groove for the cleaning of the disk surface.

The radial distribution of bonding coatings takes place optionally by means of a pressing and/or suction operation. For that purpose, at least one of the disks to be bonded together is impacted with bonding material in an annular pattern. The disks are then Oplaced one upon the other and optionally pressed together. The pressing together will then in that case preferably take place by means of a suction process in the central, or optionally in the outer zone of the ring, so that the bonding material will be distributed radially over the desired area, and the disks are bonded together at a desired distance from one another after the bonding material has hardened.

The selected width and diameter of the wetting zone will depend upon the additional processing desired.

The annular nozzle unit preferably forms an overflow arrangement during which the coating liquid will flow out in an upward direction, radially outward or optionally inward over a nozzle boundary and, due to the force of gravity, reach the collection zone. The wetting zone thereby lies above the nozzle boundary as an overflow level. It is obvious that an arrangement set up differently can also be provided in place of the overflow arrangement, in which case the fluid after exiting, or running through the wetting zone, will not continue to flow due to gravity, but is actively guided by a suction device.

When the upper side of the disk is coated, as in the case of the known solutions, the danger arises that droplets of liquid will reach the lower side of the disk due to the force of gravity. When the lower side of the disk is coated, as provided for per a preferred execution variant, no coating liquid will reach the upper side which is not to be coated. There is also no danger that dirt particles will settle onto the coating from above.

From the collection zone the coating liquid is sent, preferably via a separation device, to a storage container which will include, for example, a filtering and/or degassing device. The coating liquid will be prepared anew from the storage container and sent via a conveyer arrangement to the nozzle unit. In the case of a simple annular nozzle, the latter is supplied over a rotationally symmetrical distribution arrangement in order to generate a rotationally symmetrical outflow pattern from a central feed. There are also advantageous execution variants in which the nozzle unit is built up from individual nozzles arranged in the shape of a ring. In that case, these individual nozzles can be supplied over a common, but also each over a separate, feed line. In the case of individual nozzles and optionally also in that of an undivided annular nozzle, there is also the possibility for the formation of a pulsing wetting zone. For example, a device for varying the throughput is provided, which makes it optionally possible to obtain varying or pulsing partial flows on the periphery of the wetting zone with a rotating part of the nozzle. This can be advantageous when making contact and, in particular, when releasing the contact between the disk and the wetting zone on the basis of the defined contact boundaries and their shift. Execution variants are also possible, in which the disk is in contact with the liquid in the wetting zone, not along a closed periphery, but only within rotating segments of the same. This is achieved for example when a projecting fluid contact zone moves along the wetting zone as a wave front.

An effect like that achieved for example with a pulsing wetting zone can also be obtained with a tumbling movement of the disk: Provision is thereby made in a possible execution variant for the holding device to contain a tumbling unit. Because in particular the transition from laminar to turbulent flow has an influence upon the distribution of the applied coating liquid, it is sufficient in some cases for a tumbling or tipping movement to be executed during the separation of the disk from the wetting zone. The result of the tumbling movement during separation of the disk from the fluid is that a contact-free zone of increasing length arises on the boundary line. In some cases, in the case of a tumbling disk, it is expedient to dispense entirely with a circular closed contact between the disk and the fluid and to provide merely an increasingly and decreasingly rotating contact length during approach and remoyal. If the contact is to take place simultaneously along the entire periphery, the danger arises that gas bubbles will be included. This can be prevented with a tumbling movement already during the approach of the disk.

When joining two disks by means of a bonding material, it can in some cases be expedient for an optimal distribution of the material applied to a disk if one of the two disks executes an analogous tumbling movement, but with a minimal deflection.

The drawings explain the invention with the aid of an execution variant. In the drawings:
- Fig. 1: is a vertical section through a coating device before the disk comes into contact with the coating liquid,
- Fig. 2: presents a vertical section through an annular nozzle device and a disk which comes into contact with the coating liquid,
- Fig. 3: is a vertical section through an annular nozzle unit and a disk which is coated with the coating liquid in an annular pattern,
- Fig. 4: is a schematic view of the rotating arrangement for a coating liquid,
- Fig. 5: shows a vertical section through two disks to be bonded together,
- Fig. 6 and 7: each show a vertical section through a holding arrangement for bringing two disks together, before and after they are brought together.

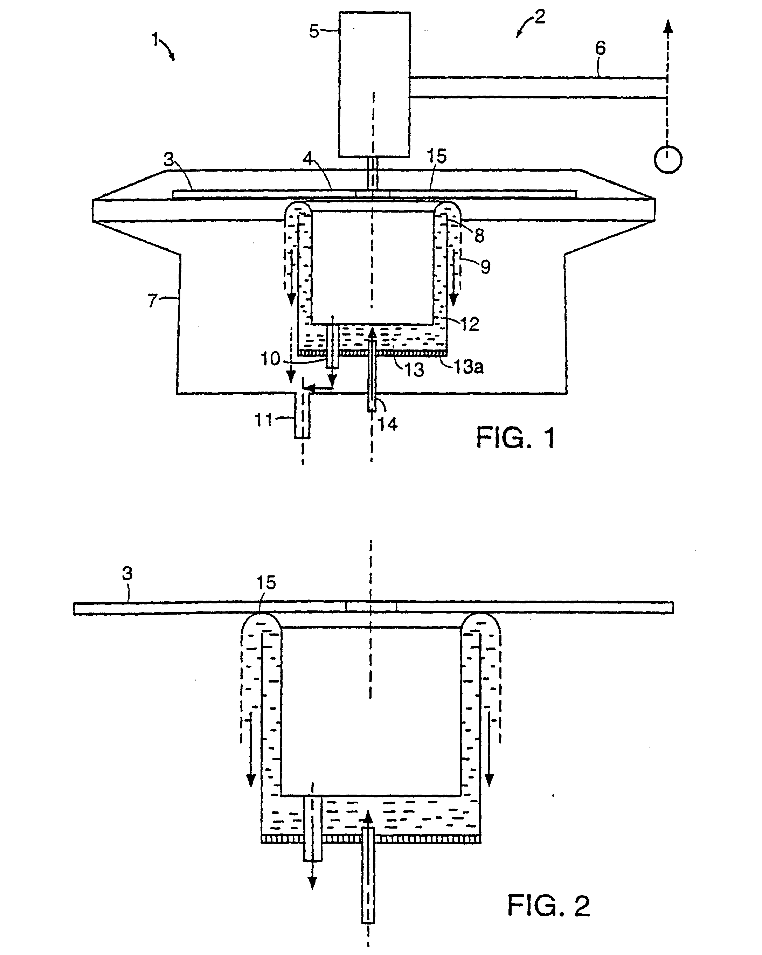

Fig. 1 shows a coating device 1 with a holder 2 for holding a disk 3 to be coated. The holding device 2 includes a contact zone 4 against which the disk 3 lies. To obtain the holding force, a partial vacuum is induced in a channel of the contact zone provided for the purpose. The holding force could also however be generated by a mechanical clamping device. The holder 2 preferably includes a rotating drive 5, so that a centrifugal process can thus be carried out after application of the coating liquid. A movement device 5 of the holding arrangement 2 makes it possible to receive the disk 3, to move it into the coating device 1 or into a coating zone, and to hand it off to a device for additional processing once it is coated.

Formed around and beneath the coating zone is a collection zone 7 which collects both the fluid 9 flowing downward from a circular ring nozzle 8 as well as that fluid cast off by the disk. A connecting line 10 to the collection zone 7 is provided in order, if necessary, to permit also the recovery of fluid from the interior of the ring nozzle 8. From the collection zone 7, the liquid flows further through a drainage line 11.

The ring nozzle 8 is the outlet port of an annular channel 12, which leads from a disk-shaped distribution zone 13 to the ring nozzle 8. The distribution zone 13 is supplied with coating liquid centrally through a feed line 14. In the execution variant shown, the inner edge of the ring nozzle 8 extends upward somewhat further than the outer edge, so that the coating liquid flowing upward through the annular channel 12 will flow radially outward over the outer edge on exiting the ring nozzle 8. The liquid projecting above the ring nozzle 8 in an annular pattern forms a wetting zone 15.

To obtain a uniform coating on all disks coated one after the other it is extremely important for the coating liquid in the wetting zone 15 to have a defined viscosity. For that it must be possible to set the temperature precisely. A heater 13a is assigned to the distribution zone 13 in the execution variant shown. At least one temperature value of the coating liquid is detected as a control value for controlling the heat output. Unwanted temperature changes prior to exit from the ring nozzle 8 are avoided as a result of the large flow through the annular channel 12 or its sufficiently large slot width. Temperature variations between the site of temperature adjustment and the wetting zone 15 are kept to a minimum by setting the temperature near the ring nozzle 8. It is obvious that the heating device 13a can also be positioned at a different location on the coating-liquid circuit. If there is a possibility that the temperature of the circulating coating liquid will rise above the temperature desired, use can also be made expediently or exclusively of a cooling device.

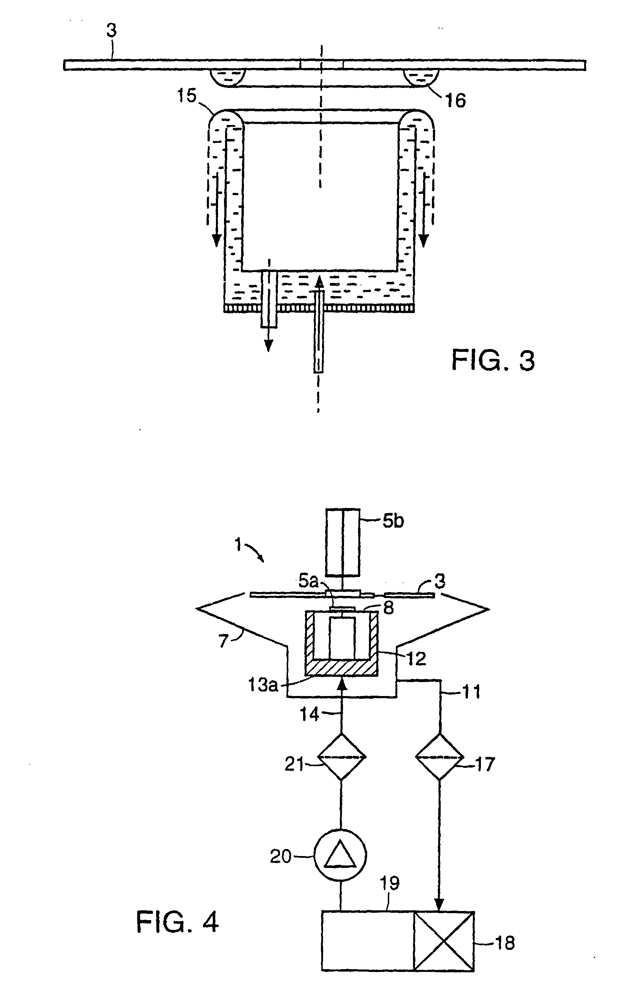

For the application of coating liquid, as in Fig. 2, the lower side of the disk 3 is then brought into contact with the wetting zone 15. The total flow of coating liquid clearly exceeds the partial flow briefly remaining on a disk 3. Then, as seen in Fig. 3, the disk 3 is again separated from the wetting zone 15. A ring 16 of coating liquid remains on the disk 3 as a result of adhesive forces. If a centrifugal distribution is desired, a centrifuging operation can then be carried out directly. But it would also be possible to remove the disk 3 from the coating device 1 before the centrifuging operation and optionally hand it off to a separate centrifuge or to a bonding device.

As already described in the introduction to the specification, the holding device 2 could also include a tumbling device and/or the ring nozzle 8 a device for varying the throughput in order to generate variable or pulsing partial flows on the boundary line of the wetting zone.

Fig. 4 shows the a solution for obtaining a circulation of the coating liquid. The drainage line 11 leads to a storage tank 19 via a reflux filter 17 and a degassing baffle system 18. The coating liquid is sent from the storage tank 19 to the ring nozzle 8, through an inflow filter 21 and a feed line 14, by means of a conveyer pump 20. The nozzle unit, the collection zone 7, the conveyer pump 20 and a thermostatically controlled heating and/or cooling unit 13a form a circulation system making it possible to carry the coating liquid through the wetting zone 15 continuously and at essentially constant temperature and viscosity, in which case the total flow of the coating liquid will preferably clearly exceed the partial flow remaining briefly on a disk 3.

The execution variant according to Fig. 4 contains a holder 5a inside the annular channel 12. The holder 5a forms, optionally, merely a stop for the disk 3 during coating. If necessary, the holder 5a belongs to the holding device 2 and includes for that purpose a fixed or optionally rotating holding surface. Correspondingly, a manipulator 5b is arranged above it for the introduction and removal of disks 3.

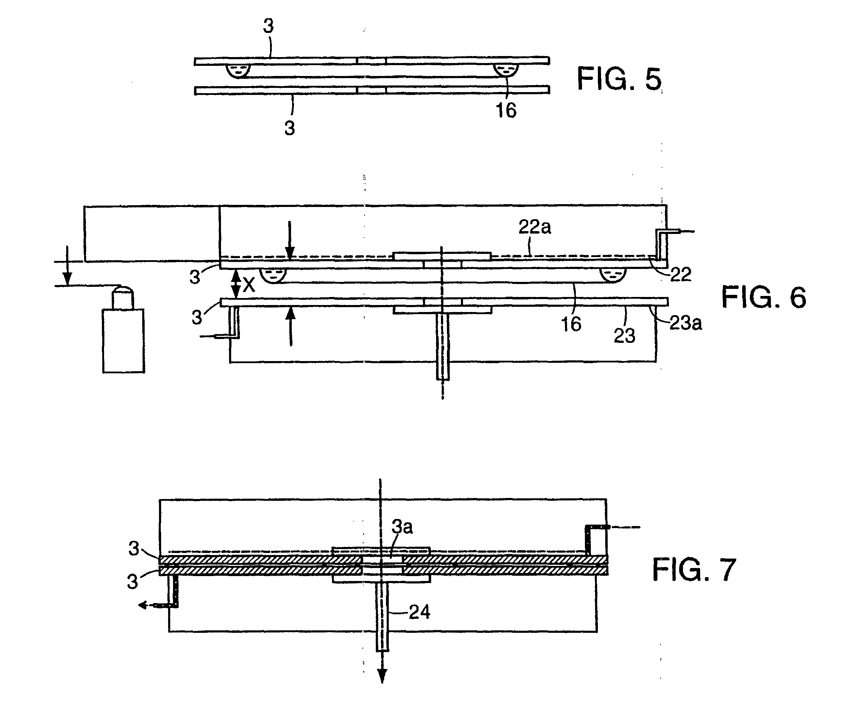

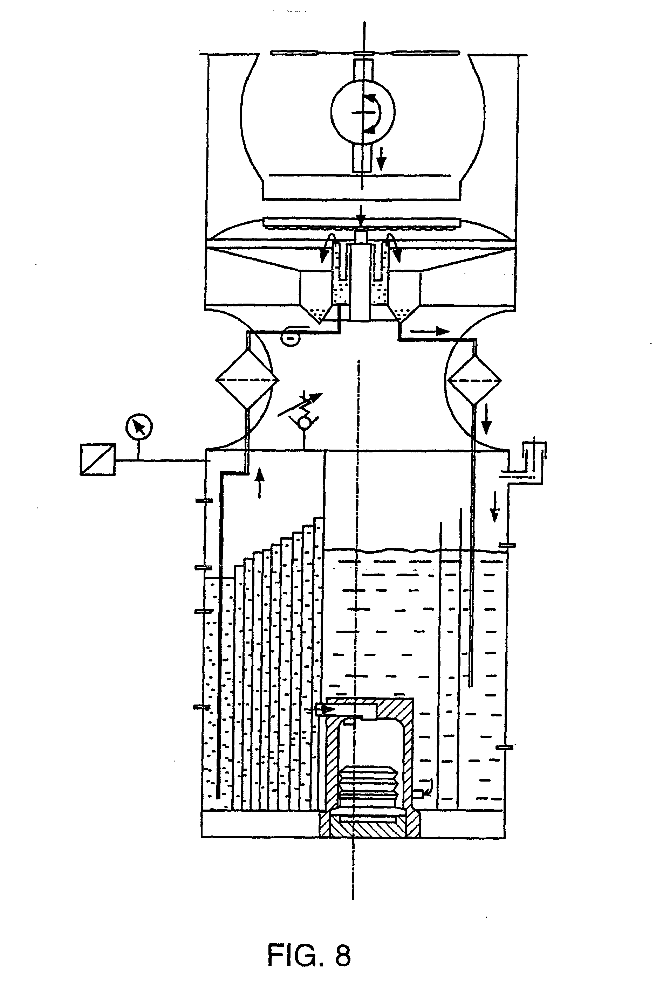

Fig. 5 shows two disks 3 to be bonded together, the upper one exhibiting a ring 16 of coating liquid on its lower side. To bond these disks together, a holding arrangement is provided, for example, with an upper holding surface 22 and a lower holding surface 23 which each hold a disk 3. The latter are respectively provided with an annular channel 22a, 23a, to which a partial vacuum can be applied to hold the disks 3.

According to Fig. 7, after the two disks 3 have been brought together, a partial vacuum is applied via a suction line 24, at the hole 3a of the disks 3, which draws the two disks together and leads to a uniform distribution of the coating liquid. When UV-hardening bonding material is used, the holding surfaces 22, 23 can optionally contain a UV-source, so that the hardening can be carried out with a defined disk interval.

It is obvious that devices per the invention can be combined, as desired, with known centrifuge, handling or bonding equipment.

## Claims

1. Apparatus for applying a ring (16) of liquid by coating to a disk (3) of an optically-readable data carrier, the apparatus having a holding device (2) for holding the disk (3) and an applicator with an annular nozzle unit (8) for dispensing liquid, wherein
the appticator is arranged relative to the holder to position the annular nozzle unit (8) to apply the liquid to a flat, underside portion of the disk (3); and wherein the apparatus includes
means for providing the liquid to flow essentially continuously through the nozzle unit (8) to an annular wetting zone (15):
a collection zone (7) for recovering a portion of the liquid flowing to the wetting zone: is recoverable in the collection zoge (7), and
a movement unit (6) for relatively moving the nozzle unit (8) and the disk (3) so that the flat underside portion of the disk is brought into contact with the disk (3) concentrically relative to the wetting zone(15).

2. Apparatus according to claim 1, **characterized by** the fact that the holding device (2) contains the movement unit (6) and enables the lower side of the disk (3) to be moved toward the nozzle (8) from above, and the nozzle unit (8) forms an overflow davice from which the coating liquid flows upward and outward and teaches the collection zone (7) due to the force of gravity.

3. Apparatus according to claim 1, wherein the nozzle unit (8), the collection zone (7), a pumping unit (20) and a thermostatically controlled heating and/or cooling device belong to a circulation device which enables the coating liquid to be conveyed through the wetting zone (15) continuously, with essentially constant viscosity and temperature, in which case the total flow of coating liquid preferably clearly exceeds the partial flow remaining briefly on a disk (3).

4. Apparatus according to claim 3, **characterized by** the fact that the holding device (2) includes a tumbling unit, with which the time-shifted contacting with and/or separation from the wetting zone (15) can be achieved in the peripheral region of the wetting zone.

5. Apparatus according to one of the claims 3 through 4, **characterized by** the fact that the nozzle unit (8) males it possible to produce a device for variation of the throughpur for the generation of varying or pulsing partial flows at the boundary tine of the wetting zone.

6. Apparatus according to one of the claims 3 through 5, **characterized by** the fact that the holding device (2) comprises a centrifuge, or the disk (3) can be conveyed to a centrifuge, so that the coating liquid deposited in the shape of a ring on the disk (3) can be distributed radially outward by the rotation of the disk (3), in which case the collection zone (7) preferably extends around the zone of the centrifuge in order to catch any coating liquid thrown off.

7. Apparatus according to one of the claims 3 through 5, **characterized by** the fact the holding device (2) makes it possible to move a disk (3) covered with coating liquid concentrically toward a second disk (3) in such a way that the two disks (3) are mutually positioned with an intervening gap in which the coating liquid of the disk (3) is arranged in the shape of a ring, and a radial distribution of the coating liquid and a desired interval between the disks (3) can be achieved with a pressing device and/or suction device for the application of a partial vacuum to the gap.

8. Process for apply a ring of liquid by coating to an optically readable disk with a holding device (2) for holding a disk (3), and a conveying device and applicator for applying the liquid to the disk (3), **characterized by** the fact that the application of the liquid takes place via the concentric contacting of an annular disk zone on the flat underside of the disk with liquid in an annular wetting zone (15), in which case the liquid is conveyed essentially continuously from an annular nozzle device (8), through the wetting zone (15) into a collection zone (7).

9. Process according to claim 8, wherein the coating liquid, applied in the shape of a ring, is distributed radially over the disk (3) by means of a centrifuging process.

10. Process according to claim 8 or 9, wherein the coating liquid, applied in the shape of a ring, is distributed radially between two disks (3) to be bonded together by means of a pressing operation and/or the application of a partial vacuum to a gap between the two disks (3).

11. A system for forming an annular ring of UV-hardening bonding material to one of two disks of an optically-readable data carrier, the system including a bonding material applicator and a disk holder, **characterized in that**
the bonding material applicator includes a ring nozzle (8) to create an annular ring of bonding material and a thermal management means (13a) for keeping the bonding material within a range of temperatures; and the disk holder (2) includes holding means for holding the one disk and a movement unit (6) for relatively moving the one disk and the bonding material applicator into contact with one another so that the applicator deposits a ring of bonding material to a flat, underside surface of the one disk.

12. The system of claim 11 wherein the disk holder (2) includes a rotating drive (5) for rotating the one disk.

13. The system of claim 11 wherein the system includes a collection zone (7) for collecting any bonding material that overflows the nozzle (8).

14. A method of forming an annular ring of UV-hardening bonding material to one of two disks of an optically-readable data carrier, the method including
holding the one disk so that a flat, underside surface is exposed in a predefined area;
forming an annular ring of bonding material to face the exposed surface,
moving the one disk and the annular ring of bonding material into sufficient contact to deposit a ring of bonding material on the one disk so that the one disk may subsequently be arranged with the second disk and so that the ring of material may be subsequently radially distributed between the two disks.

15. The method of claim 14 further including thermally controlling the bonding material.

16. The method of claim 14 wherein the holding is accomplished with a vacuum force.

17. The method of claim 14 wherein relatively moving is accomplished by keeping the annular ring of bonding material fixed and by lowering the one disk into contact therewith.

18. The method of claim 14 wherein the forming is accomplished by pumping the bonding material through an annular channel to an upward facing ring nozzle through which the annular ring is exposed.

19. The method of claim 14 wherein the relatively moving includes relatively moving the one disk angularly relative to an origin of the annular ring.

20. The method of claim 14 Wherein the forming is accomplished by pulsing partial flows of the bonding material to form the annular ring.

21. The method of claim 14 further including the step of tumbling or tipping the disk relative to the ring during the separation of the disk from the annular ring.

## Patentansprüche

1. Vorrichtung zum Auftragen eines Rings (16) von Flüssigkeit durch Beschichtung auf eine Platte (3) eines optisch lesbaren Datenträgers, wobei die Vorrichtung eine Haltevorrichtung (2) zum Halten der Platte (3) und eine Appliziereinrichtung mit einer kreisringförmigen Düseneinheit (8) zum Nachliefern von Flüssigkeit hat, wobei
die Appliziereinrichtung relativ zum Halter angeordnet ist, um die kreisringförmige Düseneinheit (8) zu positionieren, um die Flüssigkeit auf einen flachen Unterseitenteil der Platte (3) aufzutragen; und wobei die Vorrichtung folgendes enthält:
eine Einrichtung zum Liefern der Flüssigkeit, um im Wesentlichen kontinuierlich durch die Düseneinheit (8) zu einer kreisringförmigen Benetzungszone (15) zu fließen;
eine Sammelzone (7) zum Wiedergewinnen eines Teils der zur Benetzungszone fließenden Flüssigkeit, der in der Sammelzone (7) wiedergewinnbar ist, und
eine Bewegungseinheit (6) zum relativen Bewegen der Düseneinheit (8) und der Platte (3), so dass der flache Unterseitenteil der Platte relativ zur Benetzungszone (15) konzentrisch in Kontakt mit der Platte (3) gebracht wird.

2. Vorrichtung nach Anspruch 1, **gekennzeichnet durch** die Tatsache, dass die Haltevorrichtung (2) die Bewegungseinheit (6) enthält und ermöglicht, dass die Unterseite der Platte (3) von oben in Richtung zur Düse (8) bewegt wird, und die Düseneinheit (8) eine Überlaufvorrichtung bildet, von welcher die Beschichtungsflüssigkeit aufgrund der Schwerkraft nach oben und nach außen fließt und die Sammelzone (7) erreicht.

3. Vorrichtung nach Anspruch 1, wobei die Düseneinheit (8), die Sammelzone (7), eine Pumpeinheit (20) und eine thermostatisch gesteuerte Heizund/oder Kühivorrichtung zu einer Zirkulationsvorrichtung gehören, die ermöglicht, dass die Beschichtungsflüssigkeit mit im Wesentlichen konstanter Viskosität und Temperatur kontinuierlich durch die Benetzungszone (15) befördert wird, in welchem Fall der Gesamtfluss von Beschichtungsflüssigkeit vorzugsweise deutlich größer als der Teilfluss ist, der kurz an einer Platte (3) bleibt.

4. Vorrichtung nach Anspruch 3, **gekennzeichnet durch** die Tatsache, dass die Haltevorrichtung (2) eine Schleudereinheit enthält, mit welcher die zeitverschobene Kontaktierung mit und/oder Trennung von der Benetzungszone (15) im peripheren Bereich der Benetzungszone erreicht werden kann.

5. Vorrichtung nach einem der Ansprüche 3 bis 4, **gekennzeichnet durch** die Tatsache, dass es die Düseneinheit (8) möglich macht, eine Vorrichtung zur Änderung des Durchsatzes für die Erzeugung von sich ändernden oder pulsierenden Teilflüssen an der Grenzlinie der Benetzungszone zu erzeugen.

6. Vorrichtung nach einem der Ansprüche 3 bis 5, **gekennzeichnet durch** die Tatsache, dass die Haltevorrichtung (2) eine Zentrifuge aufweist, oder die Platte (3) zu einer Zentrifuge befördert werden kann, so dass die in der Form eines Rings an der Platte (3) abgelagerte Beschichtungsflüssigkeit **durch** die Drehung der Platte (3) radial nach außen verteilt werden kann, in welchem Fall sich die Sammelzone (7) vorzugsweise um die Zone der Zentrifuge erstreckt, um die abgeworfene Beschichtungsflüssigkeit aufzufangen.

7. Vorrichtung nach einem der Ansprüche 3 bis 5, **gekennzeichnet durch** die Tatsache, dass es die Haltevorrichtung (2) möglich macht, eine Platte (3), die konzentrisch in Richtung zu einer zweiten Platte (3) mit einer Beschichtungsflüssigkeit bedeckt ist, auf eine solche Weise zu bewegen, dass die zwei Platten (3) wechselseitig mit einem dazwischenliegenden Spalt positioniert sind, in welchem die Beschichtungsflüssigkeit der Platte (3) in der Form eines Rings angeordnet ist, und eine radiale Verteilung der Beschichtungsflüssigkeit und ein erwünschter Abstand zwischen den Platten (3) mit einer Druckvorrichtung und/oder einer Saugvorrichtung für die Anwendung eines Teilvakuums auf den Spalt erreicht werden kann.

8. Verfahren zum Auftragen eines Rings von Flüssigkeit durch Beschichtung auf eine optisch lesbare Platte mit einer Haltevorrichtung (2) zum Halten einer Platte (3) und einer Beförderungsvorrichtung und einer Appliziereinrichtung zum Auftragen der Flüssigkeit auf die Platte (3), **gekennzeichnet durch** die Tatsache, dass das Auftragen der Flüssigkeit über das konzentrische Kontaktieren einer kreisringförmigen Plattenzone an der flachen Unterseite der Platte mit Flüssigkeit in einer kreisringförmigen Benetzungszone (15) stattfindet, in welchem Fall die Flüssigkeit im Wesentlichen kontinuierlich von einer kreisringförmigen Düsenvorrichtung (8) über die Benetzungszone (15) in eine Sammelzone (7) befördert wird.

9. Verfahren nach Anspruch 8, wobei die in der Form eines Rings aufgetragene Beschichtungsflüssigkeit mittels eines Zentrifugierprozesses in radialer Richtung über der Platte (3) verteilt wird.

10. Verfahren nach Anspruch 8 oder 9, wobei die in der Form eines Rings aufgetragene Beschichtungsflüssigkeit zwischen zwei Platten (3) radial verteilt wird, die mittels einer Druckoperation und/oder der Anwendung eines Teilvakuums auf einen Spalt zwischen den zwei Platten (3) miteinander zu verbinden sind.

11. System zum Ausbilden eines kreisringförmigen Rings eines UV-härtenden Verbindungsmaterials an einer von zwei Platten eines optisch lesbaren Datenträgers, wobei das System eine Verbindungsmaterial-Appliziereinrichtung und einen Plattenhalter enthält, **dadurch gekennzeichnet, dass**
die Verbindungsmaterial-Appliziereinrichtung eine Ringdüse (8) enthält, um einen kreisringförmigen Ring von Verbindungsmaterial zu erzeugen, und eine thermische Steuereinrichtung (13a) zum Halten des Verbindungsmaterials innerhalb eines Temperaturbereichs; und
der Plattenhalter (2) eine Halteeinrichtung zum Halten der einen Platte enthält, und eine Bewegungseinheit (6) zum relativen Bewegen der einen Platte und der Verbindungsmaterial-Appliziereinrichtung in Kontakt miteinander, so dass die Appliziereinrichtung einen Ring von Verbindungsmaterial auf eine flache Unterseitenfläche der einen Platte ablagert.

12. System nach Anspruch 11, wobei der Plattenhalter (2) einen Drehantrieb (5) zum Drehen der einen Platte enthält.

13. System nach Anspruch 11, wobei das System eine Sammelzone (7) zum Sammeln von irgendeinem Verbindungsmaterial enthält, das bei der Düse (8) überläuft.

14. Verfahren zum Ausbilden eines kreisringförmigen Rings eines UV-härtenden Verbindungsmaterials an einer von zwei Platten eines optisch lesbaren Datenträgers, wobei das Verfahren folgendes enthält:
Halten der einen Platte so, dass eine flache Unterseitenfläche in einem vordefinierten Bereich freigelegt ist;
Ausbilden eines kreisringförmigen Rings von Verbindungsmaterial, um der freigelegten Fläche gegenüberzuliegen;
Bewegen der einen Platte und des kreisringförmigen Rings von Verbindungsmaterial in ausreichendem Kontakt, um einen Ring von Verbindungsmaterial auf der einen Platte abzulagern, so dass die eine Platte nachfolgend mit der zweiten Platte angeordnet werden kann und so dass der Ring von Material nachfolgend zwischen den zwei Platten radial verteilt werden kann.

15. Verfahren nach Anspruch 14, das weiterhin ein thermisches Steuern des Verbindungsmaterials enthält.

16. Verfahren nach Anspruch 14, wobei das Halten mit einer Vakuumkraft erreicht wird.

17. Verfahren nach Anspruch 14, wobei das relative Bewegen durch Festhalten des kreisringförmigen Rings von Verbindungsmaterial und durch Absenken der einen Platte in Kontakt mit diesem erreicht wird.

18. Verfahren nach Anspruch 14, wobei das Ausbilden erreicht wird durch Pumpen des Verbindungsmaterials durch einen kreisringförmigen Kanal zu einer nach oben schauenden Ringdüse, wodurch der kreisringförmige Ring freigelegt wind.

19. Verfahren nach Anspruch 14, wobei das relative Bewegen ein relatives Bewegen der einen Platte winkelförmig relativ zu einem Ursprung des kreisringförmigen Rings enthält.

20. Verfahren nach Anspruch 14, wobei das Ausbilden erreicht wird durch Pulsieren von Teilflüssen des Verbindungsmaterials, um den kreisringförmigen Rings auszubilden.

21. Verfahren nach Anspruch 14, das weiterhin den Schritt zum Schleudern oder Kippen bzw. Neigen der Platte relativ zum Ring während der Trennung der Platte vom kreisringförmigen Ring enthält.

## Revendications

1. Dispositif pour appliquer par revêtement un anneau (16) de liquide sur un disque (3) d'un support de données à lecture optique, le dispositif présentant un dispositif de maintien (2) pour maintenir le disque (3) et un applicateur avec une unité de buse annulaire (8) pour distribuer du liquide dans lequel,
l'applicateur est agencé par rapport au support pour positionner l'unité de buse annulaire (8) afin d'appliquer le liquide sur une partie de sous-face, plate du disque (3) ; et dans lequel le dispositif comprend
des moyens pour assurer un écoulement du liquide essentiellement continuellement à travers l'unité de buse (8) vers une zone de mouillage annulaire (15) ;
une zone collectrice (7) pour récupérer une partie du liquide s'écoulant vers la zone de mouillage ; peut être recouverte dans la zone collectrice (7), et
une unité de déplacement (6) pour déplacer relativement l'unité de buse (8) et le disque (3) de sorte que la partie de sous-face, plate du disque soit mise en contact avec le disque (3) concentriquement par rapport à la zone de mouillage (15).

2. Dispositif selon la revendication 1, **caractérisé en ce que** le dispositif de maintien (2) contient l'unité de déplacement (6) et permet à la partie inférieure du disque (3) d'être déplacée vers la buse (8) à partir du dessus, et **en ce que** l'unité de buse (8) forme un dispositif de trop-plein à partir duquel le liquide de revêtement s'écoule vers le haut et vers l'extérieur et atteint la zone collectrice (7) en raison de la force de gravité.

3. Dispositif selon la revendication 1, dans lequel l'unité de buse (8), la zone collectrice (7), une unité de pompage (20) et un dispositif de chauffage et/ou de refroidissement commandé par thermostat font partie d'un circuit de circulation qui permet au liquide de revêtement d'être transporté de manière continue à travers la zone de mouillage (15), avec une viscosité et une température sensiblement constantes, auquel cas l'écoulement total de liquide de revêtement dépasse, de préférence, manifestement l'écoulement partiel restant un bref instant sur un disque (3).

4. Dispositif selon la revendication 3, **caractérisé en ce que** le dispositif de maintien (2) comprend une unité de culbutage, avec laquelle la communication à horaire décalé avec et/ou séparation de la zone de mouillage (15) peut être effectuée dans la région périphérique de la zone de mouillage.

5. Dispositif selon l'une quelconque des revendications 3 à 4, **caractérisé en ce que** l'unité de buse (8) permet de produire un dispositif de variation du débit pour la production de flux partiels variables ou pulsés au niveau de la ligne de démarcation de la zone de mouillage.

6. Dispositif selon l'une quelconque des revendications 3 à 5, **caractérisé en ce que** le dispositif de maintien (2) comprend une centrifugeuse, ou le disque (3) peut être transporté vers une centrifugeuse, de façon à ce que le liquide de revêtement déposé sous la forme d'un anneau sur le disque (3) puisse être distribué radialement vers l'extérieur par la rotation du disque (3), auquel cas la zone collectrice (7) s'étend, de préférence, autour de la zone de la centrifugeuse afin de recueillir tout liquide de revêtement expulsé.

7. Dispositif selon l'une quelconque des revendications 3 à 5, **caractérisé en ce que** le dispositif de maintien (2) permet de déplacer un disque (3) recouvert de liquide de revêtement concentriquement vers un second disque (3) de façon à ce que les deux disques (3) soient mutuellement positionnés avec un espace intermédiaire dans lequel le liquide de revêtement du disque (3) est agencé sous la forme d'un anneau, et une distribution radiale du liquide de revêtement et un intervalle souhaité entre les disques (3) peuvent être réalisés avec un dispositif de pression et/ou un dispositif de succion pour l'application d'un vide partiel à l'espace.

8. Procédé pour appliquer par revêtement un anneau de liquide sur un disque à lecture optique avec un dispositif de maintien (2) pour maintenir un disque (3), et un dispositif de transport et un applicateur pour appliquer le liquide sur le disque (3), **caractérisé en ce que** l'application de liquide a lieu par le contact concentrique d'une zone de disque annulaire sur la sous-face plate du disque avec le liquide dans une zone de mouillage annulaire (15), auquel cas le liquide est transporté essentiellement de manière continue depuis un dispositif de buse annulaire (8), à travers la zone de mouillage (15) dans une zone collectrice (7).

9. Dispositif selon la revendication 8 dans lequel le liquide de revêtement, appliqué sous la forme d'un anneau, est distribué radialement sur le disque (3) au moyen d'un processus de centrifugation.

10. Dispositif selon la revendication 8 ou 9, dans lequel le liquide de revêtement, appliqué sous la forme d'un anneau, est distribué radialement entre deux disques (3) devant être liés ensemble au moyen d'une opération de pressage et/ou de l'application d'un vide partiel sur un espace entre les deux disques (3).

11. Système pour former un anneau annulaire en matériau de liaison durcissant sous UV sur l'un des deux disques d'un support de données à lecture optique, le système comprenant un applicateur de matériau de liaison et un support de disque, **caractérisé en ce que**
l'applicateur de matériau de liaison comprend une buse en forme d'anneau (8) pour créer un anneau annulaire de matériau de liaison et des moyens de gestion thermique (13a) pour garder le matériau de liaison à l'intérieur d'un intervalle de température ; et
le support de disque (2) comprend des moyens de maintien pour maintenir ledit disque et une unité de déplacement (6) pour déplacer relativement ledit disque et l'applicateur de matériau de liaison en contact l'un avec l'autre de façon à ce que l'applicateur dépose un anneau de matériau de liaison sur une surface de sous-face, plate dudit disque.

12. Système selon la revendication 11, dans lequel le support de disque (2) comprend une commande rotative (5) pour faire tourner ledit disque.

13. Système selon la revendication 11, dans lequel le système comprend une zone collectrice (7) pour recueillir tout matériau de liaison qui déborde de la buse (8).

14. Procédé de formation d'un anneau annulaire en matériau de liaison durcissant sous UV sur l'un des deux disques d'un support de données à lecture optique, le procédé comprenant les étapes consistant à :
maintenir ledit disque de façon à ce que une surface de sous-face, plate soit exposée dans une aire prédéfinie ;
former un anneau annulaire en matériau de liaison pour faire face à la surface exposée ;
déplacer ledit disque et l'anneau annulaire en matériau de liaison pour le mettre suffisamment en contact pour déposer un anneau en matériau de liaison sur ledit disque de façon à ce que ledit disque puisse par la suite être agencé avec le second disque et de façon à ce que l'anneau de matière puisse par la suite radialement être distribué entre les deux disques.

15. Procédé selon la revendication 14, comprenant en outre le contrôle thermique du matériau de liaison.

16. Procédé selon la revendication 14, dans lequel le maintien est accompli avec une force d'aspiration.

17. Procédé selon la revendication 14, dans lequel le déplacement relatif est accompli en maintenant fixé l'anneau annulaire en matériau de liaison et en abaissant ledit disque en contact ledit anneau.

18. Procédé selon la revendication 14, dans lequel la formation est accomplie en pompant le matériau de liaison à travers un canal annulaire vers une buse en forme d'anneau faisant face vers le haut à travers laquelle l'anneau annulaire est exposé.

19. Procédé selon la revendication 14, dans lequel le déplacement relatif comprend le déplacement relatif dudit disque de manière angulaire par rapport à une origine de l'anneau annulaire.

20. Procédé selon la revendication 14, dans lequel la formation est accomplie en rendant pulsés les flux partiels du matériau de liaison pour former l'anneau annulaire.

21. Procédé selon la revendication 14, comprenant en outre l'étape consistant à faire culbuter ou basculer le disque par rapport à l'anneau pendant la séparation du disque de l'anneau annulaire.
